# EUROPEAN PATENT APPLICATION

(11) **EP 4 096 360 A1**
(43) Date of publication of application: **30.11.2022**
(21) Application number: 22176057.2
(22) Date of filing: 30.05.2022
(51) Int. Cl.: H05B 6/12, F24C 7/06, F24C 15/10

(54) **ELECTRIC RANGE**

(30) Priority: 28.05.2021 KR 20210069177
(71) Applicant: LG Electronics Inc., SEOUL 07336 (KR)
(72) Inventor: KIM, Hyunsoo, 08592 Seoul (KR); CHO, Junghyeon, 08592 Seoul (KR)
(74) Representative: Vossius & Partner Patentanwälte Rechtsanwälte mbB

(57) **Abstract**

An electric range (1) is provided that includes a case (100) that defines an external appearance of the electric range(1); at least one heater (310, 320, 330) that heats an object; at least one upper bracket (210, 220, 230) that is disposed under the at least one heater to support the at least one heater; and a support (500) disposed under the at least one upper bracket. The support includes a mount (510, 520) on which a printed circuit board (800) is mounted, and a boss portion (530) that supports the at least one upper bracket.

## Description

### BACKGROUND

### 1. Field

An electric range is disclosed herein.

### 2. Background

This section provides background information related to the present disclosure, which is not necessarily prior art.

Various types of cooking appliances are used to heat food or other items (hereinafter, collectively "food") at home or in a restaurant. Examples of such a cooking appliance include a gas range and an electric range.

An electric range is largely classified into a resistance heating type and an induction heating type. A resistance heating electric range heats an item to be heated, for example, cookware, such as a pot or a frying pan, through radiation or conduction of heat generated by applying electric current to a metal resistance wire or a non-metallic heating element, such as silicon carbide. An induction heating electric range heats a metallic item to be heated by inducing eddy current in the item using a magnetic field generated around a coil through application of high-frequency power to the coil.

The basic principle of induction heating is as follows. When high-frequency current is applied to a working coil or a heating coil, a magnetic field is generated around the coil. As the item is heated by electromagnetic induction caused by the generated magnetic field, heat is generated from the item, thereby heating food inside of the item.

That is, the electric range includes a heater including a working coil receiving high-frequency current or heated to high temperatures and electronic components supplying electric current to the heater. A magnetic field or heat generated by the heater has adverse effects on the electronic components. Accordingly, a bracket is disposed over the electronic components to block the magnetic field or heat and to support the heater. However, such a bracket can undergo deflection over time due to a weight of the heater, for example, and thus, requires structure to support the bracket.

### BRIEF DESCRIPTION OF THE DRAWINGS

Embodiments will be described in detail with reference to the following drawings in which like reference numerals refer to like elements, and wherein:
FIG. 1 is a perspective view of an electric range according to an embodiment;
FIG. 2 is a perspective view of a main body of the electric range of FIG. 1 according to an embodiment;
FIG. 3 is an exploded perspective view of the electric range of FIG. 1;
FIG. 4 is a perspective view of the electric range of FIG. 1, excluding an upper plate, heating modules, and an upper bracket;
FIG. 5 is a perspective view of a second support of the electric range according to an embodiment;
FIG. 6 is an enlarged view of a boss of the second support of the electric range of FIG. 5 according to an embodiment;
FIG. 7 is a plan view of the second support of the electric range of FIG. 5 according to an embodiment;
FIG. 8 is a cross-sectional view of a boss portion of the second support of the electric range of FIG. 7, taken along line VIII-VIII';
FIG. 9 is a plan view of a case of the electric range according to an embodiment; and
FIG. 10 is a cross-sectional view of the case of the electric range of FIG. 9, taken along line X-X'.

### DETAILED DESCRIPTION

Reference will now be made to various embodiments, examples of which are illustrated in the accompanying drawings such that embodiments may be easily implemented by those skilled in the art. Description of known functions and constructions which may unnecessarily obscure the subject matter will be omitted. Like components will be denoted by like reference numerals throughout the specification.

It will be understood that, although the terms "first" and "second", for example, may be used herein to describe various elements, these elements should not be limited by these terms. These terms are only used to distinguish one element from another element. Thus, unless stated otherwise, a first element discussed below could be termed a second element, or vice versa, without departing from the scope.

It will be understood that, when a component is referred to as being disposed "at an upper (lower) portion of" or "on (or "under") another component, it can be directly formed to adjoin an upper surface ("a lower surface") of the other component, or intervening component(s) may be interposed therebetween.

In addition, when a component is referred to as being "connected to", "coupled to" or "joined to" another component, these components may be connected, coupled, or joined to each other directly or through another component, or intervening component(s) may be "interposed" therebetween.

Throughout, unless stated otherwise, each element may be singular or plural in number.

As used herein, the singular forms, "a," "an," and "the" are intended to include the plural forms as well, unless the context clearly indicates otherwise. Moreover, the terms "comprises," "comprising," "includes," and/or "including," when used in this specification, should not be construed to mean that a process, method, article, or apparatus comprising a list of elements or steps necessarily comprises all the elements or all the steps. Thus, such a process, method, article, or apparatus may be free from some of the elements or the steps, or may further include one or more other elements or steps.

Throughout, the expression "A and/or B" means A, B, or A and B, unless stated otherwise, and the expression "C to D" means "greater than or equal to C and less than or equal to D", unless stated otherwise.

Hereinafter, an electric range according to an embodiment will be described.

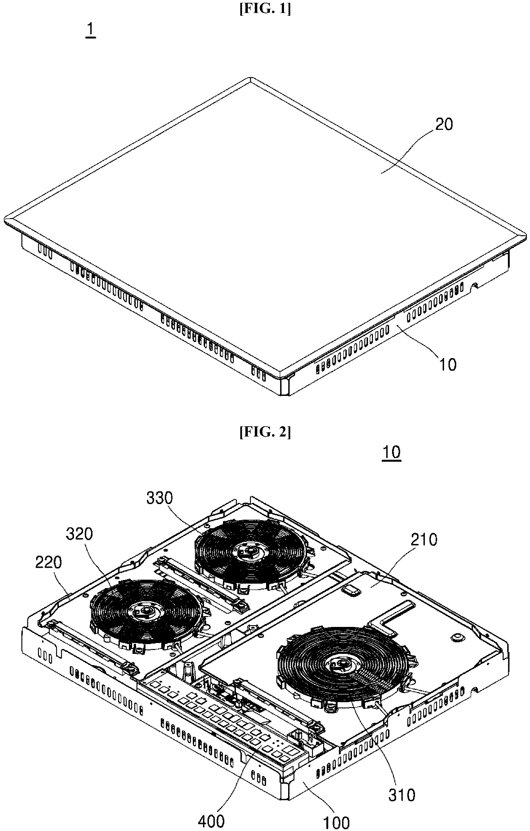

FIG. 1 is a perspective view of an electric range according to an embodiment. FIG. 2 is a perspective view of a main body of the electric range according to an embodiment.

Referring to FIG. 1, the electric range 1 according to this embodiment may include a main body 10 and an upper plate 20. Referring to FIG. 2, the main body 10 may include a case 100, a first upper bracket 210, a second upper bracket 220, a first heater 310, a second heater 320, and a third heater 330, and an operation unit 400.

Hereinafter, a side of the electric range 1 on which the operation unit 400 is disposed is defined as "front" and a side opposite the front is defined as "rear". In addition, a right or first lateral side of the electric range 1 as viewed from the front is defined as "right" and a left or second lateral side of the electric range 1 as viewed from the front is defined as "left".

The main body 10 may include at least one heater and a drive unit that operates the heater. The heater may heat an item to be heated. The drive unit may include the operation unit 400 and multiple components disposed on a printed circuit board.

The case 100 may receive the printed circuit board having various components thereon, and a support on which the printed circuit board is mounted, for example. The case 100 may be provided in the form of a generally cuboidal box which is open at a top thereof, for example. The case 100 may define a component housing space therein.

The case 100 may serve to protect components of the electric range. The case 100 may be formed of aluminum, for example; however, embodiments are not limited thereto. In some embodiments, the case 100 may be insulated to suppress leakage of heat generated by the heaters 310, 320, and/or 330 to outside of the electric range 1.

The first upper bracket 210 may support first heater 310, and the second upper bracket 220 may support second heater 320 and third heater 330. The first upper bracket 210 and the second upper bracket 220 may be coupled to the case 100.

The first heater 310, the second heater 320, and the third heater 330 may heat an item to be heated. The heaters 310, 320, 330 may heat the item to be heated through induction heating. Alternatively, the heaters 310, 320, 330 may heat the item to be heated by resistance heating. Alternatively, some of the heaters 310, 320, 330 may heat the item to be heated by induction heating and the others may heat the item to be heated by resistance heating. When induction heating is employed to heat the item to be heated, high-frequency power may be applied to a working coil of each of the heaters 310, 320, 330. When high-frequency power is applied to the working coil, a magnetic field is generated around the working coil, inducing eddy current in the item to be heated. As a result, the item to be heated, which is formed of a metal, may be heated by the eddy current.

The first heater 310, the second heater 320, and the third heater 330 may be disposed under the upper plate 20. The first heater 310 may be mounted on the first upper bracket 210, and the second heater 320 and the third heater 330 may be mounted on the second upper bracket 220.

In the following description, it is assumed that the electric range includes three heaters that heat an item to be heated by induction heating and two upper brackets. However, it should be understood that a type and number of heaters and a number of upper brackets are not limited thereto.

The operation unit 400 allows a user to input a command to operate the electric range 1. The operation unit 400 may be disposed in front of the first upper bracket 210. In addition, the operation unit 400 may be disposed at the front of the electric range between the upper plate 20 and the case 100 for user convenience. However, it should be understood that embodiments are not limited thereto and a position of the operation unit 400 may be changed differently from that shown in FIG. 1, as needed.

The operation unit 400 may include a plurality of key switches. A user may control operation of the electric range by inputting a command to the operation unit 400 using the plurality of key switches.

An upper surface of the operation unit 400 may be placed under a cover plate 21. The operation unit 400 may correspond in location to an input interface on the cover plate 21. The operation unit 400 and the input interface may be connected to each other by a touch input method.

The upper plate 20 may be coupled to an upper portion of the main body 10, and may provide a space in or on which an item to be heated is seated.

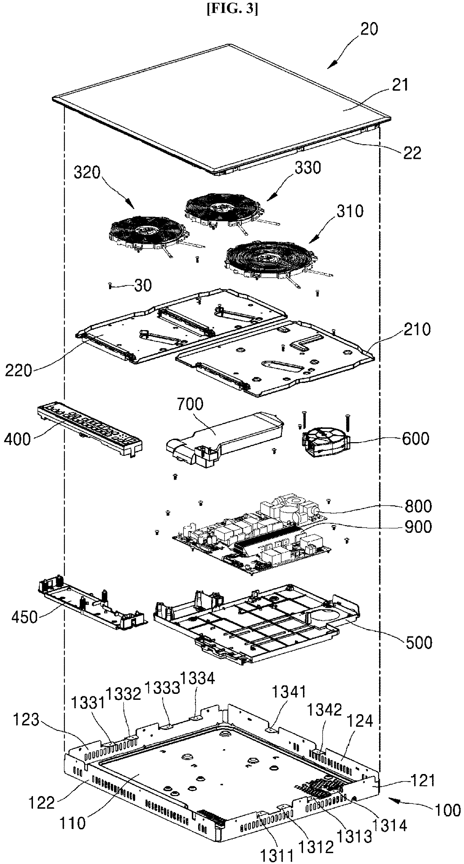

FIG. 3 is an exploded perspective view of an electric range according to an embodiment. Referring to FIG. 3, the electric range 1 according to this embodiment may include main body 10 and upper plate 20. The main body 10 of the electric range 1 according to this embodiment may include case 100, first upper bracket 210, second upper bracket 220, first heater 310, second heater 320, third heater 330, operation unit 400, a first support 450, a second support 500, an air blower fan 600, an air guide 700, a printed circuit board 800, and a heat sink 900. The upper plate 20 of the electric range 1 according to this embodiment may include cover plate 21 and a cover bracket 22.

The cover plate 21 may close an upper portion of a housing space defined by the case 100. The cover plate 21 may serve to protect various components inside of the housing space defined by the case 100.

In addition, the cover plate 21 may have an upper surface on which an item to be heated is disposed. When the electric range 1 employs induction heating, a magnetic field generated by the heaters 310, 320, and/or 330 may pass through the cover plate 21 before reaching the item to be heated. The cover plate 21 may be formed of a ceramic material, for example; however, embodiments are not limited thereto.

The cover plate 21 may be provided on the upper surface thereof with an input interface configured to receive a user input. The input interface may be disposed in a specific region on the upper surface of the cover plate 21, and may display a specific image. The input interface may receive a touch input from a user, and the electric range may be operated based on the received touch input. The touch input may be input to the operation unit 400.

In addition, a display may be disposed in a specific region of the upper surface of the cover plate 21 to display an operating state of the electric range 1. For example, an optical display region may be formed on the upper surface of the cover plate 21 and a light source unit may be disposed under the cover plate 21. Accordingly, light emitted from the light source unit may be delivered to a user through the optical display region. The optical display region may correspond in location of the light source unit. When a plurality of light source units is provided, an equal number of optical display regions may be formed on the upper surface of the cover plate 21.

The cover bracket 22 may support the cover plate 20. The cover bracket 22 may be disposed outside of the case 100, and may be coupled to the case 100. For example, the cover bracket 22 and the case 100 may be coupled to each other using a fastener, such as a bolt.

The cover bracket 22 may have a generally rectangular shape, for example. Sides of the cover bracket 22 may correspond in location to sides of the cover plate 21, respectively.

A shape and function of case 100 may be the same as described above with reference to FIG. 1 and FIG. 2. The case 100 may be formed of a generally plate-shaped material fabricated in the form of a box, for example.

The case 100 may include a first casing 110, second casings 121, 122, 123, 124, and third casings 1311, 1312, 1313, 1314, 1331, 1332, 1333, 1334, 1341, 1342. The first casing 110 may form a bottom surface of the case 100. The first casing 110 may have a generally rectangular shape, for example. The first support 450 and the second support 500 may be mounted on an upper surface of the first casing 110.

The first casing 110 may be provided with at least one air vent to facilitate cooling of the printed circuit board 800 disposed therein and electronic components mounted on the printed circuit board 800. More specifically, the first casing 100 may be formed with an intake portion through which external air is introduced thereinto and a discharge portion through which internal air is discharged therefrom.

The second casings 121, 122, 123, 124 may be bent from the first casing 110 and may define an external appearance of the case 100. According to an embodiment, second-first casing 121 may form a right or first lateral surface of the case 100, second-second casing 122 may form a front surface of the case 100, second-third casing 123 may form a left or second lateral surface of the case 100, and second-fourth casing 124 may form a rear surface of the case 100.

The second casings 121, 122, 123, 124 may be vertically bent from an edge of the first casing 110 to form an exterior of the case 100. The second casings 121, 122, 123, 124 may be disposed on four sides of the first casing 110 having a generally rectangular shape, respectively. The second casings 121, 122, 123, 124 may reinforce an overall rigidity of the case 10.

That is, the second casings 121, 122, 123, 124 bent from the first casing 110 may prevent the plate-shaped first casing 110 from being warped or damaged by a weight of internal components or by an external force. In addition, the first casing 110 may have a bent portion to reinforce the overall rigidity of the case 10, as described hereinafter.

Each of the second casings 121, 122, 123, 124 may have multiple slit-shaped ventilation holes. The ventilation holes allow the inside and outside of the case 100 to communicate with each other to allow a flow of air into/out of the case 100, thereby contributing to cooling of components received in the case 100.

The third casings 1311, 1312, 1313, 1314, 1331, 1332, 1333, 1334, 1341, 1342 may support the first upper bracket 210 and the second upper bracket 220. Each of the third casings 1311, 1312, 1313, 1314, 1331, 1332, 1333, 1334, 1341, 1342 may be bent from an upper end of a corresponding one of the second casings 121, 123, 124. More specifically, third-first casings 1311, 1312, 1313, 1314 may be bent to the left or lateral side from an upper end of the second-first casing 121, third-third casings 1331, 1332, 1333, 1334 may be bent to the right or lateral side from an upper end of the second-third casing 123, and third-fourth casings 1341, 1342 may be bent forward from the upper end of the second-fourth casing 124.

Each of the third-first casings 1311, 1312, 1313, 1314 and the third-fourth2 casing 1342 may have a hole for coupling with the first upper bracket 210. With the bottom surface of the first upper bracket 210 seated on upper surfaces of the third-first casings 1311, 1312, 1313, 1314 and the third-fourth2 casing 1342, the first upper bracket 210 may be coupled to each of the third-first casings 1311, 1312, 1313, 1314 and the third-fourth2 casing 1342 using a coupling member, such as a bolt, for example. Each of the third casings 1331, 1332, 1333, 1334 and the third-fourth 1 casing 1341 may have a hole for coupling with the second upper bracket 210. With a bottom surface of the second upper bracket 220 seated on upper surfaces of the third casings 1331, 1332, 1333, 1334 and the third-fourth1 casing 1341, the second upper bracket 220 may be coupled to each of the third casings 1331, 1332, 1333, 1334 and the third-fourth1 casing 1341 using a coupling member, such as a bolt, for example.

The first support 450 may support the operation unit 400. The first support 450 may be coupled to the first casing 110 of the case 100 using a bolt, for example.

The operation unit 400 may be mounted on the first support 450. The operation unit 400 may be coupled to the first support 450 by interference fit, for example.

The second support 500 may support the printed circuit board 800 and the air blower fan 600. The second support 500 may be coupled to the first casing 110 of the case 100 using a bolt, for example.

Various electronic components may be mounted on the printed circuit board 800 to operate the heat sink 900, and the heaters 310, 320, 330, for example. The printed circuit board 800 may be mounted on the second support 500 using a bolt, for example.

The electronic components mounted on the printed circuit board 800 may be powered by an external power source and may output high-frequency power to the heaters 310, 320, 330. In addition, the electronic components mounted on the printed circuit board 800 may be electrically connected to the operation unit 400, and may operate the heaters 310, 320, 330 in response to a user command input via the operation unit 400. According to some embodiments, the electronic components mounted on the printed circuit board 800 may communicate with an external device through a wire or electronically. That is, the electronic components mounted on the printed circuit board 800 may function as a controller that controls an overall operation of the electric range 1.

A device that generates a lot of heat, such as a switching device that generates high-frequency power, may be attached to the heat sink 900. The heat sink 900 may cool the device attached thereto.

The air blower fan 600 may take in air through an inlet thereof and may discharge the air through an outlet thereof. The air blower fan 600 may take in external air through the intake portion of the first casing 110. In addition, air discharged through the outlet of the air blower fan 600 may be discharged to the housing space defined by the case 100. At least a portion of the air discharged through the outlet of the air blower fan 600 may be guided to the heat sink 900 by the air guide 700 to cool the heat sink 900. The air guided by the air guide 700 may be discharged to the outside of the electric range 1 through the discharge portion of the first casing 110 after cooling the heat sink 900.

The air blower fan 600 may be mounted on the second support 500. The air blower fan 600 may be mounted on the second support 500 using a coupling member, such as a bolt, for example.

According to some embodiments, the air blower fan 600 may be coupled to the case 100 using a coupling member, such as a bolt, for example. More specifically, the bolt may be coupled to the first casing 110 of the case 100 through the air blower fan 600 and the second support 500. In this way, it is possible to maintain coupling between the air blower fan 600, the second support 500, and the case 100 even when the first casing 110, for example, undergoes deformation and to prevent air inside of the electric range 1 from being introduced into the air blower fan 600.

The air guide 700 may guide air discharged from the air blower fan 600 to move to the discharge portion of the first casing 110 of the case 100 via the heat sink 900. The air guide 700 may be mounted on the printed circuit board 800. More specifically, the air guide 700 may be mounted on the printed circuit board 800 to completely cover the heat sink 900 mounted on the printed circuit board 800.

Basic functions of the first upper bracket 210 and the second upper bracket 220 may be the same as described above with reference to FIG. 1 and FIG. 2. The first upper bracket 210 and the second upper bracket 220 may be secured to the case 100. The first upper bracket 210 and the second upper bracket 220 may be formed of aluminum; however, embodiments are not limited thereto.

The first upper bracket 210 may be disposed under the first heater 310, and the second upper bracket 220 may be disposed under the second heater 320 and the third heater 330. The first upper bracket 210 and the second upper bracket 220 may be disposed between the upper plate 20 and the space housing the printed circuit board 800 and the electronic components. Due to this structure, the first upper bracket 210 and the second upper bracket 220 may serve as a shield to prevent electromagnetic fields and/or electromagnetic waves generated from the heaters 310, 320, 330 from reaching the printed circuit board 800 and the electronic components. That is, the first upper bracket 210 and the second upper bracket 220 may serve to improve electromagnetic compatibility (EMC) of the printed circuit board 800 and to provide electromagnetic interference (EMI) shielding for the printed circuit board 800.

Each of the first upper bracket 210 and the second upper bracket 220 may include a first upper plate and a second upper plate. The first upper plate may form a bottom surface of each of the first upper bracket 210 and the second upper bracket 220. In addition, the heaters 310, 320, 330 may be mounted on the first upper plate.

The second upper plate may be bent from the first upper plate in a vertical direction of the electric range 1. The second upper plate may be vertically bent from an edge of the first upper plate.

The second upper plate may be disposed on each side of the first upper plate having a generally rectangular shape. The second upper plate may reinforce an overall rigidity of the first upper bracket 210 and the second upper bracket 220. That is, the second upper plate bent from the first upper plate may prevent the first upper plate from being warped or damaged by the weight of internal components including the heaters 310, 320, 330 or by an external force.

Due to the arrangement described above with reference to FIG. 3, all of the components of the electric range 1 may be assembled on the case 100. Accordingly, a manufacturing process of the electric range may be simplified, thereby improving production efficiency.

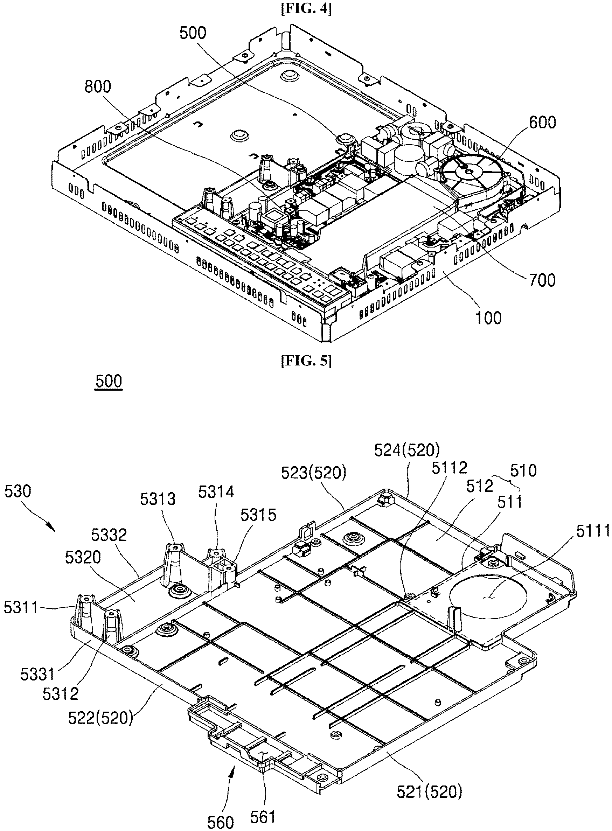

FIG. 4 is a perspective view of the electric range according to an embodiment, excluding the upper plate, the heating modules, and the upper bracket. As described above, the second support 500 may be mounted on the case 100. More specifically, the second support 500 may be mounted on the upper surface of the first casing 110 (see FIG. 3) of the case 100 using a coupling member, such as a bolt, for example. The second support 500 may serve to support the first upper bracket 210 (see FIG. 2 and FIG. 3) and the second upper bracket 220 (see FIG. 2 and FIG. 3).

In addition, the second support 500 may include an intake hole and a discharge hole. The intake hole of the second support 500 may adjoin the intake portion of the first casing 110 (see FIG. 3) of the case 100. The discharge hole of the second support 500 may adjoin the discharge portion of the first casing 110 (see FIG. 3) of the case 100.

The air blower fan 600 and the printed circuit board 800 may be mounted on the second support 500. Various electronic components including the heat sink 900 (see FIG. 3) may be mounted on the upper surface of the printed circuit board 800. The inlet of the air blower fan 600 may adjoin the intake hole of the second support 500. The outlet of the air blower fan 600 may adjoin one end of the air guide 700.

The air guide 700 may be mounted on the upper surface of the printed circuit board 800 to cover the heat sink 900. The air guide 700 may be open at a rear and bottom thereof. The air guide 700 may have a generally cuboidal shape. One or a first end (a rear surface) of the air guide 700 may adjoin the outlet of the air blower fan 600 and the other or a second end (a front portion of a lower surface) of the air guide 700 may adjoin the discharge hole of the second support 500.

When the air blower fan 600 is operated, air outside of the electric range 1 may be drawn into the inlet of the air blower fan 600 via the intake portion of the case 100 and the intake hole of the second support 500. In addition, air discharged through the outlet of the air blower fan 600 may be moved along the air guide 700 and then may be discharged to the outside of the electric range 1 via the discharge hole of the second support 500 and the discharge portion of the case.

Hereinafter, features of the second support 500 and the first casing 110 of the case 100 will be described.

FIG. 5 is a perspective view of a second support of the electric range according to an embodiment.

The second support 500 may include a mount including a first bottom plate 510 and a first side plate 520, and a boss portion 530. The mount 510, 520 may support the printed circuit board 800 (see FIG. 3 and FIG. 4) and the air blower fan 600 (see FIG. 3 and FIG. 4).

The first bottom plate 510 may form a bottom surface of the mount 510, 520 of the second support 500. The printed circuit board 800 and the air blower fan 600 may be mounted on an upper surface of the first bottom plate 510. The first bottom plate 510 may include a first region 511 in which the air blower fan 600 may be mounted and a second region 512 in which the printed circuit board 800 may be mounted. The first region 511 may have an intake hole 5111 through which air is drawn in.

The first side plate 520 may be bent from the first bottom plate 510 in a vertical direction of the electric range. The first side plate 520 may be vertically bent from an edge of the first bottom plate 510.

The first side plate 520 may be disposed on each side of the first bottom plate 510 having a generally rectangular shape. That is, the first side plate 520 may include a first-first side plate 521 disposed on a right or first lateral surface of the first bottom plate 510, a first-second side plate 522 disposed on a front surface of the first bottom plate 510, a first-third side plate 523 disposed on a left or second lateral surface of the first bottom plate 510, and a first-fourth side plate 524 disposed on a rear surface of the first bottom plate 510. The first-first side plate 521 may adjoin the second-first casing 121 (see FIG. 3) of the case 100, the first-second side plate 522 may adjoin the second-second casing 122 (see FIG. 3) of the case 100, and first-fourth side plate 524 may adjoin the second-fourth casing 124 (see FIG. 3) of the case 100. Hereinafter, the term "adjoin" means that a corresponding component is in close contact with another component, or is placed very close to the other component.

The first side plate 520 may reinforce an overall rigidity of the second support 500. That is, the first side plate 520 bent from the first bottom plate 510 may prevent the first bottom plate 510 from being warped or damaged by a weight of internal components, such as the printed circuit board 800 and the air blower fan 600, or by an external force.

The boss portion 530 may include a plurality of bosses 5311, 5312, 5313, 5314, 5315. Each of the plurality of bosses 5311, 5312, 5313, 5314, 5315 may support either the first upper bracket 210 or the second upper bracket 220. According to one embodiment, the boss 5315 may support the first upper bracket 210 and the bosses 5311, 5313 may support the second upper bracket 220. The boss 5315 may be coupled to the first upper bracket 210 using a coupling member, such as a bolt, for example, and the bosses 5311, 5313 may be coupled to the second upper bracket 220 using a coupling member such as a bolt, for example.

When the electric range includes two upper brackets 210, 220 as in this embodiment, the boss portion 530 may be disposed on the two upper brackets 210, 220. Accordingly, the boss portion 530 may support both of the upper brackets 210, 220.

In addition, the boss portion 530 may be disposed at a front of the electric range 1 with respect to a middle of the electric range 1 in a frontward-to-rearward direction thereof. That is, the boss portion 530 may be disposed closer to the second-second casing 122 (see FIG. 3) than to the second-fourth casing 124 (see FIG. 3).

As shown in Figure 2, the operation unit 400 may be disposed at the front of the case 100. This makes it difficult for the upper brackets 210, 220 to extend to the second-second casing 122 (see FIG. 3) and also makes it difficult to form a structure at an upper end of the second-second casing 122 (see FIG. 3) to support the upper brackets 210, 220. According to this embodiment, the boss portion 530 may support front and/or middle portions of the upper brackets 210, 220 with reference to the frontward-to-rearward direction. Accordingly, it is possible to more effectively prevent deflection of the upper brackets 210, 220.

The boss portion 530 may include a second bottom plate 5320 and second side plates 5331, 5332. The second bottom plate 5320 may form a bottom surface of the boss portion 530. The second side plates 5331, 5332 may be vertically bent from an edge of the second bottom plate 5320. The second side plates 5331, 5332 may improve an overall rigidity of the boss portion 530.

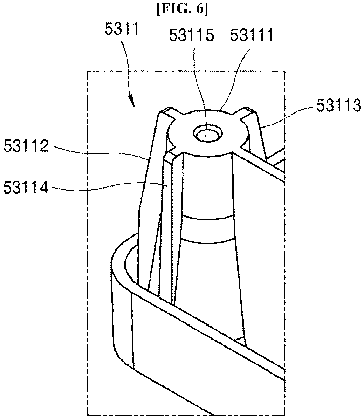

In addition, the second support 500 may further include a discharge portion 560 having a discharge hole 561. The discharge portion 560 may adjoin a lower front end of the air guide 700 (see FIG. 3 and FIG. 4). At least a portion of air discharged through the outlet 610 (see FIG. 6) of the air blower fan 600 may be guided to the heat sink 900 (see FIG. 3) by the air guide 700 to cool the heat sink 900, and then may be discharged to the outside of the electric range 1 through the discharge hole 561 of the discharge portion 560.

The air blower fan 600 may be mounted in the first region 511 of the first bottom plate 510 of the second support 500. The first region 511 may include an intake hole 5111 that provides a passage through which air is drawn into to the air blower fan 600. The air blower fan 600 may be secured to the second support 500 using coupling members, such as bolts, for example, each passing through a corresponding one of securing portions 632, 633 of the air blower fan 600 and a corresponding one of fan securing holes 5112, 5113.

The first bottom plate 510, the first side plate 520, the boss portion 530, a rib 540, and the discharge portion 560, forming the second support 500, may be integrally formed with one another. The second support 500 may be manufactured by injection molding, for example.

FIG. 6 is an enlarged view of a first boss of the second support of the electric range according to an embodiment. The first boss 5311 (see FIG. 5) may include a body 53111, and multiple ribs 53112, 53113, 53114. The other bosses 5312, 5313, 5314 (see FIG. 5) may also have a similar structure to the first boss 5311 of FIG. 6.

The body 53111 may have a shape of a cylinder tapered toward an upper end thereof. In addition, the body 53111 may be formed on an upper surface thereof with a coupling hole 53115 to which a coupling bolt may be fastened.

The ribs 53112, 53113, 53114 may be formed radially along an outer peripheral surface of the body 53111. Due to this structure, the first boss 5311 may have improved rigidity.

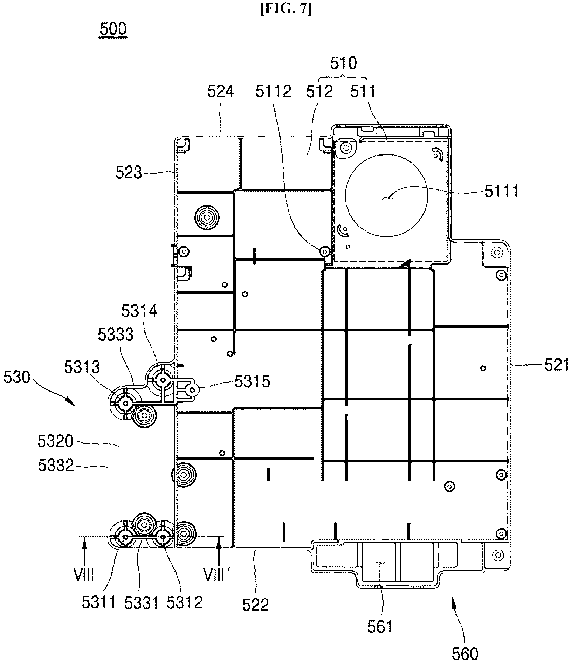

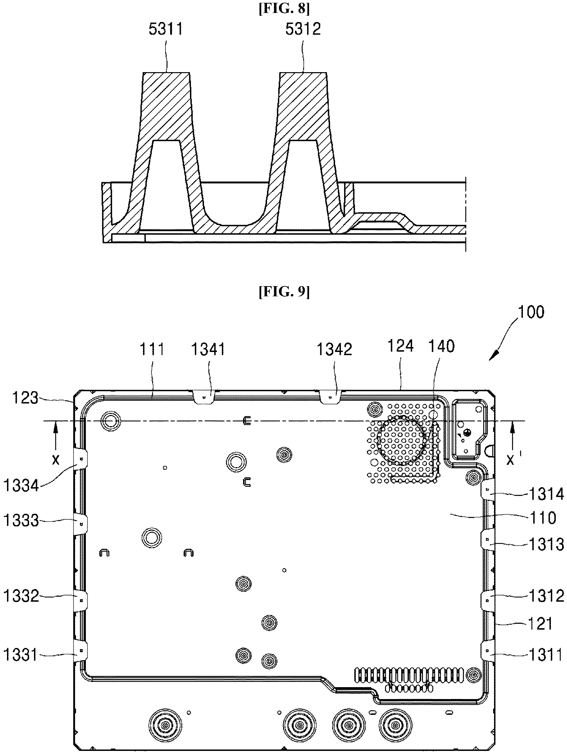

FIG. 7 is a plan view of the second support of the electric range of FIG. 5 according to an embodiment. FIG. 8 is a cross-sectional view of the second support of the electric range of FIG. 7, taken along line VIII-VIII'.

The overall features of each of the first bottom plate 510, the first side plate 520, the boss portion 530, and the discharge portion 560 may be the same as described above with reference to FIG. 5. The boss portion 530 may include a second bottom plate 5320 forming a bottom surface of the boss portion 530, second side plates 5331, 5332, 5333 bent upward from an edge of the second bottom plate 5320, and bosses 5311, 5312, 5313, 5314 disposed on an upper surface of the second bottom plate 5320.

The boss portion 530 may be disposed to one side, for example, to the left, of the mount 510, 520. More specifically, one side, for example, the right side, of the second bottom plate 5320 of the boss portion 530 may adjoin one side, for example, the left side, of the first bottom plate 510 of the mount. The first-3 side plate 523 may be bent upward from a boundary between the first bottom plate 510 and the second bottom plate 5320.

The boss portion 530 may further include a fifth boss 5315 secured to a securing portion that extends from the first-3 side plate 523 in a direction away from the boss portion 530. The fifth boss 5315 may serve to support the first upper bracket 210.

Referring to FIG. 8, the body 53111 (see FIG. 6) of each of the bosses 5311, 5312 of the boss portion 530 may be hollow inside. In this way, the boss portion may have improved moldability.

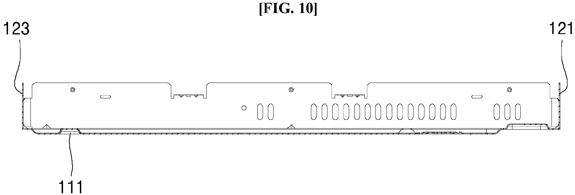

FIG. 9 is a plan view of the case of the electric range according to an embodiment. FIG. 10 is a cross-sectional view of the case of the electric range of FIG. 9, taken along line X-X'.

Structures and functions of second casings 121, 122, 123, 124 and the third casings 1311, 1312, 1313, 1314, 1331, 1332, 1333, 1334, 1341, 1342 are the same as described above with reference to FIG. 3. The first casing 110 of the case 100 according to this embodiment may include an intake portion 140 and a discharge portion 150. The intake portion 140 provides a passage through which air is drawn into the inlet of the air blower fan 600 when the air blower fan 600 is in operation. The intake portion 140 may have a porous structure having multiple holes.

With the second support 500 mounted on the case 100, the intake portion 140 may correspond in location to the first region 511. In addition, the intake portion 140 may have a larger area than the inlet 620 (see FIG. 7) of the air blower fan 600. According to some embodiments, the intake portion 140 may have the same area as the first region 511. In addition, the rib 540 of the second support 500 may be disposed on the lower surface of the first region 511 to surround the intake portion 140.

The discharge portion 150 provides a passage through which air having passed through the air guide 700 (see FIG. 3 and FIG. 4) is discharged to the outside of the electric range 1 when the air blower fan 600 is in operation. With the second support 500 mounted on the case 100, the discharge portion 150 may correspond in location to the discharge portion 560 of the second support 500.

The first casing 110 of the case 100 according to this embodiment may further include a bent portion 111. The bent portion 111 may be formed along the edge of the first casing 110.

The bent portion 111 may be formed by a forming process, for example. The bent portion 111 may be formed by vertically bending a portion of the first casing 110. More specifically, the bent portion 111 may have an upwardly convex shape in cross-sectional view. The bent portion 111 of the first casing 110 may serve to improve rigidity of the case 100.

Embodiments disclosed herein provide an electric range which may effectively prevent deflection of an upper bracket that supports a heater. Embodiments disclosed herein further provide an electric range which may be manufactured with reduced manual labor while preventing deflection of an upper bracket that supports a heater. Embodiments disclosed herein furthermore provide an electric range which may be manufactured with reduced costs while preventing deflection of an upper bracket that supports a heater.

In accordance with embodiments disclosed herein, an electric range may include a support having a printed circuit board mounted thereon and that supports an upper bracket. In accordance with embodiments disclosed herein, an electric range may include a support having structure in which a mount having a printed circuit board, for example, mounted thereon is integrally formed with a boss portion that supports an upper bracket.

In accordance with embodiments disclosed herein, an electric range is provided that may include: a case that defines an external appearance of the electric range; a heater that heats a heating object; an upper bracket disposed under the heater to support the heater; and a support disposed under the upper bracket. The support may include a mount on which a printed circuit board is mounted, and a boss portion that supports the upper bracket. The case may include a first casing forming a bottom surface of the case; a second-first casing that is vertically bent from a right or first lateral edge of the first casing and forms a right or second lateral surface of the case; a second-second casing vertically that is bent from a front edge of the first casing and forms a front surface of the case; a second-third casing that is vertically bent from a left edge of the first casing and forms a first lateral surface of the case; a second-fourth casing that is vertically bent from a rear edge of the first casing and forms a rear surface of the case; a third-first casing that is bent to the right or laterally from an upper end of the second-first casing and supports the upper bracket; a third-third casing that is bent to the left or laterally from an upper end of the second-third casing and supports the upper bracket; and a third-fourth casing that is bent forward from an upper end of the second-fourth casing and supports the upper bracket. The boss portion may be closer to the second-second casing than to the second-fourth casing.

The electric range may further include an upper plate disposed over the case and having an upper surface on which the heating object is disposed. The heater may be disposed under the upper plate.

The electric range may further include an operation unit disposed between the upper bracket and the second-second casing.

The third-fourth casing may include a third-fourth-1 casing and a third-fourth-2 casing disposed to the right or laterally of the third-fourth1 casing. The upper bracket may include a first upper bracket supported by the third-first casing, the third-fourth-2 casing, and the boss portion, and a second upper bracket supported by the third-third casing, the third-fourth-1 casing, and the boss portion.

The boss portion may include a bottom plate that forms a bottom surface of the boss portion; a side plate bent upward from an edge of the bottom plate; and a first boss that is disposed on an upper surface of the bottom plate and supports the second upper bracket. The first boss may include a body having a shape of a cylinder tapered toward an upper end thereof, and at least one rib radially formed along an outer peripheral surface of the body.

The support may further include a first side plate bent upward from a boundary between the bottom plate of the boss portion and a bottom plate of the mount forming a bottom surface of the mount. The boss portion may further include a second boss secured to a securing portion that extends from the first side plate in a direction away from the boss portion. The second boss may support the first upper bracket.

The case may further include a bent portion formed along an edge of the first casing and having an upwardly convex shape. The mount may include a first bottom plate forming a bottom surface of the mount, and a first side plate bent upward from an edge of the first bottom plate.

The boss portion may include a second bottom plate that adjoins the first bottom plate and forms a bottom surface of the boss portion, a second side plate bent upward from an edge of the second bottom plate, and at least one first boss that is disposed on an upper surface of the second bottom plate and supports the upper bracket. The boss portion may further include a second boss secured to a securing portion that extends from the first side plate in a direction away from the boss portion, the first side plate being bent upward from a boundary between the first bottom plate and the second bottom plate.

The upper bracket may include a first upper bracket supported by the case and the second boss, and a second upper bracket supported by the case and the first boss. The boss portion may be closer to a front surface of the case than to a rear surface of the case.

The electric range according to embodiments disclosed herein may effectively prevent deflection of the upper bracket supporting the heater. In addition, the electric range according to embodiments disclosed herein may be manufactured with reduced manual labor and cost.

Although embodiments have been described herein, it should be understood by those skilled in the art that these embodiments are given by way of example only, and that various modifications, variations, and alterations can be made without departing from the spirit and scope. In addition, although advantageous effects provided by a certain configuration are not clearly described in description of the exemplary embodiments, it should be noted that expectable effects of the corresponding configuration should be acknowledged.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower" and "upper", for example, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments are described herein with reference to cross-section illustrations that are schematic illustrations of idealized embodiments (and intermediate structures). As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An electric range, comprising:
a case (100) that defines an external appearance of the electric range (1);
at least one heater (310, 320, 330) for heating an object;
at least one upper bracket (210, 220, 230) that is disposed under the at least one heater (310, 320, 330) to support the at least one heater (310, 320, 330); and
a support (500) disposed under the at least one upper bracket (210, 220, 230), wherein the support (500) comprising a mount (510, 520) on which a printed circuit board (800) is mounted and a boss portion (530) that supports the at least one upper bracket (210, 220, 230).

2. The electric range according to claim 1, further comprising:
an upper plate (20) disposed over the case (100) and having an upper surface on which the object is placeable,
wherein the at least one heater (310, 320, 330) is disposed under the upper plate (20).

3. The electric range according to claim 1, wherein the case (100) comprises:
a first casing (110) that forms a bottom surface of the case (100);
a second-first casing (121) that is vertically bent from a first lateral edge of the first casing (110) and forms a first lateral surface of the case (100);
a second-second casing (122) that is vertically bent from a front edge of the first casing (110) and forms a front surface of the case (100);
a second-third casing (123) that is vertically bent from a second lateral edge of the first casing (110) and forms a second lateral surface of the case (100);
a second-fourth casing (124) that is vertically bent from a rear edge of the first casing (110) and forms a rear surface of the case (100);
a third-first casing (1311, 1312, 1313, 1314) that is bent laterally from an upper end of the second-first casing (121) and supports the upper bracket (210, 220, 230);
a third-third casing (1331, 1332, 1333, 1334) bent that is laterally from an upper end of the second-third casing (123) and supports the upper bracket (210, 220, 230); and
a third-fourth casing (1341, 1342) that is bent forward from an upper end of the second-fourth casing (124) and supports the upper bracket (210, 220, 230).

4. The electric range according to claim 3, wherein the boss portion (530) is closer to the second-second casing (122) than to the second-fourth casing (124).

5. The electric range according to claim 2, 3, or 4, further comprising:
an operation unit (400) including a plurality of input keys disposed between the at least one upper bracket (210, 220, 230) and the second-second casing (122).

6. The electric range according to claim 2, 3, 4, or 5, wherein:
the third-fourth casing (1341, 1342) comprises a third-fourth-1 casing (1341) and a third-fourth-2 casing (1342) disposed laterally of the third-fourth-1 casing (1341); and
the at least one upper bracket (210, 220, 230) comprises a first upper bracket (210) supported by the third-first casing (1311, 1312, 1313, 1314), the third-fourth-2 casing (1432), and the boss portion (530), and a second upper bracket (220) supported by the third-third casing (1331, 1332, 1333, 1334), the third-fourth-1 casing (1341), and the boss portion (530).

7. The electric range according to claim 6, wherein the boss portion (530) comprises:
a bottom plate (5320) that forms a bottom surface of the boss portion (530);
a side plate (5331, 5332) bent upward from an edge of the bottom plate (5320);
and
a first boss (5311, 5313) that is disposed on an upper surface of the bottom plate (5320) and supports the second upper bracket (220).

8. The electric range according to claim 7, wherein the first boss (5311, 5313) comprises:
a body (53111) having a shape of a cylinder tapered toward an upper end thereof;
and
at least one rib (53112, 53113, 53114) radially formed along an outer peripheral surface of the body (53111).

9. The electric range according to claim 6, 7, or 8, wherein:
the support (500) further comprises a first side plate (523) bent upward from a boundary between the bottom plate (5320) of the boss portion (530) and a bottom plate (510) of the mount (510, 520) forming a bottom surface of the mount (510, 520); and
the boss portion (530) further comprises a second boss (5315) secured to a securing portion that extends from the first side plate (520) in a direction away from the boss portion (530), wherein the second boss (5315) supports the first upper bracket (210).

10. The electric range according to any one of claims 2 to 9, wherein the case (100) further comprises a bent portion (111) formed along an edge of the first casing (110) and having an upwardly convex shape.

11. The electric range according to any one of claims 1 to 6, wherein:
the mount (510, 520) comprises a first bottom plate (510) that forms a bottom surface of the mount (510, 520) and a first side plate (520) bent upward from an edge of the first bottom plate (510); and
the boss portion (530) comprises a second bottom plate (5320) that adjoins the first bottom plate (510) and forms a bottom surface of the boss portion (530), a second side plate (5331, 5332) bent upward from an edge of the second bottom plate (5320), and a first boss (5311, 5312, 5313, 5314) that is disposed on an upper surface of the second bottom plate (5320) and supports the at least one upper bracket (210, 220, 230).

12. The electric range according to claim 11, wherein the first boss (5311, 5312, 5313, 5314) comprises:
a body (53111) having a shape of a cylinder tapered toward an upper end thereof;
and
at least one rib (53112, 53113, 53114) radially formed along an outer circumferential surface of the body.

13. The electric range according to claim 11, or 12, wherein the boss portion (530) further comprises a second boss (5315) secured to a securing portion that extends from the first side plate (520) in a direction away from the boss portion (530), wherein the first side plate (520) is bent upward from a boundary between the first bottom plate (510) and the second bottom plate (5320).

14. The electric range according to claim 13, wherein the at least one upper bracket (210, 220, 230) comprises:
a first upper bracket (210) supported by the case (100) and the second boss (5315); and
a second upper bracket (220) supported by the case (100) and the first boss (5311, 5312, 5313, 5314).

15. The electric range according to any one of claims 1 to 14, wherein the boss portion (530) is closer to a front surface of the case (100) than to a rear surface of the case (100).
